# EUROPEAN PATENT APPLICATION

(11) **EP 4 826 964 A1**
(43) Date of publication of application: **21.10.2026**
(21) Application number: 25170802.0
(22) Date of filing: 15.04.2025
(51) Int. Cl.: H02K 3/04, H02K 41/03, H02K 3/42, H02K 3/26

(54) **ELECTROMAGNETIC DRIVE SYSTEM AND STATOR UNIT FOR ELECTROMAGNETIC DRIVE SYSTEM**

(71) Applicant: ABB SCHWEIZ AG, 5400 Baden (CH)
(72) Inventor: Vogel, Philipp, 9542 Münchwilen (CH); Plainer, Manuel, 4890 Weißenkirchen i.A. (AT); Flixeder, Stefan, 4840 Vöcklabruck (AT); Radman, Karlo, 4040 Linz (AT)
(74) Representative: Weiss Patentanwalts GmbH

(57) **Abstract**

The invention relates to a stator unit (3) for moving at least one shuttle (4) of an electromagnetic drive system (1) and to an electromagnetic drive system (1) comprising at least one stator (3) forming the stator (2). The stator unit (3) comprises an arrangement of drive coils (7), which are energized by a drive current (lₒ) in an area of the at least one shuttle (4) to generate an electromagnetic field, which interacts with a magnet unit (5) arranged on the at least one shuttle (4) to move the at least one shuttle (4). The drive coils (7) are configured as elongated flat coils (8), comprising conductors (14, 15, 16, 21, 22, 23) arranged in winding layers (12, 19) being electrically insulated from each other by an electrically non-conductive insulating medium (17). An elongated flat coil (8), which is used as drive coil (7) arranged on the stator unit (3), comprises at least one winding layer (12, 19), usually two or more. In the at least one winding layer (12, 19) at least one winding (13, 21) is arranged, which comprises a forward-conductor (14, 21) and a return-conductor (15, 22) being electrically connected with one another by a cross-connection (16, 23). Furthermore, the forward-conductor (14, 21) and/or the return-conductor (15, 22) of the at least one winding (13, 21) are divided into at least two sub-conductors (141, 142, 151, 152, 211, 212, 221, 222) arranged next to each other in parallel in the at least one winding layer (12, 19) of the elongated coil (8). By dividing the forward-conductor (14, 21) and/or the return-conductor (15, 22) into at least two sub-conductors (141, 142, 151, 152, 211, 212, 221, 222), losses, in particular eddy current losses and heat losses, during operation of the electromagnetic drive system (1) are reduced and the efficiency of the stator unit (3) and the whole electromagnetic drive system (1) is increased.

## Description

### TECHNICAL FIELD OF THE INVENTION

The present invention relates generally to the field of industrial automation systems. In particular, the invention relates to a stator unit for moving at least one shuttle of an electromagnetic drive system, in particular in the form of a long stator linear motor system or planar motor system. The stator unit comprises an arrangement of drive coils, which are energized by a drive current in the area of the at least one shuttle to generate an electromagnetic field, which interacts with a magnet unit arranged on the at least one shuttle to move the at least one shuttle. The drive coils of the stator unit are configured as elongated flat coils, comprising conductors arranged in winding layers being electrically insulated from each other by an electrically non-conductive insulating medium. The present invention also relates to an associated electromagnetic drive system comprising at least one stator unit and at least one shuttle.

### BACKGROUND INFORMATION

Nowadays, electromagnetic drive systems, in particular in the form of linear drive systems or linear motor systems, are used in many applications in most of the modern manufacturing and production facilities. In particular, electromagnetic drive systems, like e.g. linear motor systems, are used to move objects or items along a predefined movement path and usually convert a rotary movement into a linear movement. Therefore, an electromagnetic drive system comprises a primary part or stator and a secondary part or rotor. The secondary part or rotor is arranged so as to be moveable relative to the primary part or stator, which is configured to produce an (electro)magnetic field. Usually, drive coils are arranged on the primary part or stator, wherein drive magnets are arranged on the secondary part or rotor, but a reverse arrangement is also possible. The drive magnets are designed as permanent magnets, electrical coils, or short-circuit windings. The drive coils are electrical coils that are energized to generate an electromagnetic field. Due to the interaction of the (electro)magnetic fields of the drive magnets and the drive coils, forces act on the secondary part, which move the secondary part relative to the primary part. The electromagnetic drive system can be designed in the form of a long stator linear motor system (short: LLM) or in the form of a planar motor system (short: PM), for example.

Long stator linear motor systems and planar motor systems as well as their applications and their mode of operation are well known from the state of the art. Both motors - a long stator linear motor and a planar motor - comprise a fixed part (the stator) and at least one movable part (the rotor), which is also referred to as mover or shuttle. The at least one movable part or shuttle is movable relative to the stator due to interacting magnetic fields in at least one direction of movement. For this purpose, a magnet unit comprising drive magnets, e.g., either electromagnets or usually permanent magnets, is arranged on one of the parts, usually on the movable part or the shuttle. The drive magnets of the magnet unit interact with the electromagnetic field generated by energized drive coils, which are arranged on the other part of the electromagnetic drive system, usually the stator. Therefore, the drive coils or different groups of drive coils arranged on the stator are energized, usually by applying electrical voltage and/or a drive current under the control of a control arrangement, to generate a time-variable and moving magnetic field. When the drive coils or different groups of drive coils are supplied with power, the generated electromagnetic field interacts with the magnetic field of the magnet unit, generating a force that moves the movable part or shuttle.

A long stator linear motor system comprises a stator composed of at least one stator unit, usually of a large number of stator units. The drive coils are arranged in fixed positions to each other on the stator or on the stator units. The stator units can have different geometries (e.g., straight lines, curves, track switches, etc.) and can be assembled to form a desired stator by lining them up accordingly. The stator then forms the movement track or movement path, along which at least one shuttle, usually a plurality of shuttles is moved. For this purpose, the shuttles each have a magnet unit, which comprises the drive magnets for the interaction with the electromagnetic field generated by energizing the drive coils arranged on the stator. The movement of the shuttles can be controlled individually and independently of each other, by energizing the drive coils interacting with each shuttle, usually by applying an electric voltage. The individual shuttles are thereby held and guided along the movement track formed by the stator. For this purpose, guiding elements (e.g., rollers, wheels, sliding elements, etc.) can be provided on the shuttle, which interact with track guiding elements on the movement track. LLMs are known, for example, from WO 2013/143783 A1 or US 2013/0074724 A1.

Planar motor systems, which are well known from state of the art, are often used as transport systems in production processes, for example, or in other applications requiring complex movement profiles. A planar motor system also comprises a stator, which is often of modular design and usually forms the fixed part of the planar motor system. Usually, the stator comprises at least one, usually several stator units, which may be connected in virtually any pattern - from squares, rectangles to complex paths to traverse around other equipment or to link different working stations of a production process. However, the stator of the planar motor system forms a movement plane, in which one or more shuttles can be moved at least two-dimensionally. Similar to the long stator linear motor system, drive coils are arranged on the stator or the stator units for this purpose. Each shuttle again comprises a magnet unit with drive magnets, usually permanent magnets, which are arranged in a two-dimensional distribution. These drive magnets interact with the moving electromagnetic field of the stator, which is generated by energizing the drive coils, e.g., by applying electrical voltage. Due to the interaction of the (electro)magnetic fields of the drive magnets of the shuttle and the energized drive coils of the stator, a driving force as well as a levitation force is generated, which are exerted on the shuttle. The levitation force is used to at least slightly lift the shuttle off the stator surface and to hold the shuttle in a constant position, e.g., an air gap can be created or set and maintained between the shuttle and the stator surface. The driving force can be used to move the shuttle in a desired direction of movement on the movement plane formed by the stator or stator unit. Additionally, the driving force can be used to generate tilting forces or moments. An at least two-dimensional interaction of the (electro)magnetic fields of the stator and the individual shuttles is necessary, whereby, for example, one of the two magnetic fields must be variable in time in at least two dimensions or both magnetic fields in at least one dimension, to enable the movement of the individual shuttles with up to six degrees of movement (i.e., three directions of movement, three directions of rotation), characteristic of the planar motor system. Therefore, the drive coils as well as the drive magnets are advantageously arranged in such a way that, in addition to a one-dimensional movement along the axes spanned by the movement plane (e.g., x- and y-axis based on a coordinate system defined by the movement plane), more complex movements of the individual shuttles in the movement plane are also possible, including e.g., lifting, lowering and rotation in relation to a vertical axis or z-axis of the coordinate system defined by the movement plane, tilting (in relation to the x- and y-axis of the coordinate system defined by the movement plane), or any combination of that and with translational movement in the movement plane. The basic structure of a planar motor system and their mode of operation are disclosed in WO 2013/059934 A1 or WO 2019/129576 A1, for example. Applications of planar motor systems are shown in EP 3 172 156 B1 or in EP 3 172 134 B1, for example.

Normally, drive coils, used in electromagnetic drive systems or arranged on the stator or stator units of the electromagnetic drive system, were built up from wound wires. But efforts to build smaller, flatter and/or more compact electromagnetic drive systems and stator units have led to the use of elongated flat coils as drive coils. This development was also triggered by the fact that especially the conventional way of producing the coils becomes increasingly uneconomic with decreasing dimensions. So nowadays, the drive coils arranged on the stator units forming the stator of an electromagnetic drive system, in particular in the form of a planar motor system, are often elongated flat coils.

An elongated flat coil comprises conductors, usually of copper, aluminum or any comparable electrically conductive material, forming the windings of the coil. The conductors normally have an elongated and flat shape, and they are arranged in one or more winding layers, wherein the winding layers are electrically insulated from each other by an insulating medium. The insulating medium is electrically non-conductive and may also be magnetically essentially non-conductive. Air, an isolation foil made e.g. of plastic, a carrier substrate, like e.g., fiber reinforced plastic or synthetic material, or ceramics, etc. can be used as insulating medium. It is also possible that the conductors are coated with the insulating medium or provided with an oxidation layer as insulating medium.

In particular, elongated flat coils can be configured as elongated printed circuit board coils or short elongated PCB coils. The conductors forming the coiled structure or windings of the coil, are created directly by traces etched from one or more layers of electrically conductive material (e.g., copper), which is laminated onto or between the layers of the electrically non-conductive insulating medium.

There are various ways of arranging and connecting the elongated flat coils, which are used as drive coils. Adjacent elongated flat coils can be controlled and energized separately (e.g., single-phase control). It is also possible that several elongated flat coils are interconnected to form a multi-phase system, usually a 3-phase system, e.g. in a star configuration with a floating star point or a star point connected to a fixed potential, as shown in WO 2020/020606 A1, for example. Furthermore, the elongated flat coils can be arranged in different arrangements on the stator unit, e.g. as concentrated or distributed coil arrangement in single layer or multi-layer configuration.

Within an electromagnetic drive system in the form of a planar motor system, the elongated flat coils, in particular if the coils are configured as elongated PCB coils, are usually arranged alternately in the direction of the axes spanned by the movement plane for the shuttles, e.g. in the direction of the x- and y-axis based on the coordinate system defined by the movement plane, on the stator units forming the stator, but different arrangements of the elongated flat coils are possible. Within an electromagnetic drive system in the form of a long stator linear motor system, for example, the elongated flat coils are arranged only in one direction (e.g. vertical to the direction of movement of the shuttle) on the stator units forming the stator. If the planar motor system shall provide a preferred direction of movement, when moving the shuttles relative to the stator, the number of elongated flat coils arranged on the stator in one direction (e.g., in direction of the x-axis) may be different from the number of elongated flat coils arranged on the stator in the other direction (e.g., in direction of the y-axis). Individual winding layers of the elongated coils may also be connected may also be connected in series or parallel.

Usually, the electromagnetic drive systems are optimized for maximum drive efficiency, i.e. a maximum holding force at standstill of the individual shuttles and/or when the shuttles are moved at low speeds. This optimization leads to elongated flat coils with the highest possible fill factor of the electrically conductive material (e.g. copper), i.e., that the elongated flat coils are provided with relatively wide conductors. When a shuttle moves on the movement plane or movement path formed by the stator units and thereby over the elongated flat coils arranged on the stator units, the magnetic field of the drive magnets of the individual shuttles induces eddy currents in the conductors of the elongated flat coils used as drive coils. The generated eddy currents essentially have two effects: ohmic losses, in particular heat losses, are generated in the elongated flat coils used as drive coils, and a magnetic field is generated that counteracts the interaction of (electro)magnetic fields of the drive coils and the drive magnets of the individual shuttles. The magnetic field generated by the eddy currents brakes the movement of a shuttle (e.g., analogous to an eddy current brake). I.e., that the drive coils have to generate a greater force exerted on the shuttle to overcome the counterforce generated by the eddy currents. So, a higher drive current has to be applied, which leads to a further increase of the ohmic losses in the elongated flat coils used as drive coils and in the control arrangement. These losses are particularly noticeable, when the shuttles move at medium and high speeds. They reduce the efficiency of the electromagnetic drive system and may lead to thermal limitations of the available forces, e.g., for the movement of the shuttle. Additionally, it may be necessary to establish additional cooling measures (e.g., water cooling) to reduce heating of the stator units, the shuttles as well as the objects moved and transported by the shuttles and an influence of the heating on sensors for position determination, for example.

### SUMMARY

Against this background, it is the objective of the present disclosure to provide a stator unit for an electromagnetic drive system as well as an associated electromagnetic drive system, in particular in the form of a long stator linear motor system or a planar motor system, which provide increased efficiency and reduction of losses, in particular of eddy current losses and ohmic or heat losses in high-speed and medium-speed applications.

These and other objectives are achieved by a stator unit and an electromagnetic drive system according to the independent claims. Advantageous embodiments of the present invention are described by the dependent claims.

According to the invention, these and other objectives are achieved by a stator unit for moving at least one shuttle of an electromagnetic drive system, wherein the stator unit comprises an arrangement of a plurality of drive coils, which are energized by a drive current in an area of the at least one shuttle to generate an electromagnetic field, which interacts with a magnet unit arranged on the least one shuttle to move the at least one shuttle. These drive coils are configured as elongated flat coils, comprising conductors arranged in winding layers being electrically insulated from each other by an electrically non-conductive insulating medium, wherein an elongated flat coil used as drive coil at least comprises one winding layer, in which at least one winding is arranged, the winding comprising a forward-conductor and a return-conductor being electrically connected with one another by a cross-connection, and wherein the forward-conductor and/or the return-conductor of the at least one winding are at least partially divided into at least two sub-conductors arranged next to each other in parallel in the winding layer.

By at least partially dividing the forward-conductor and/or the return-conductor of the drive coils into at least two sub-conductors arranged in parallel to the main flow direction of energizing drive current, losses, in particular eddy current losses and heat losses, are reduced during the operation of the electromagnetic drive system, in particular when shuttles are moved on the stator unit at medium and/or high speed. The reduction of losses leads to a higher efficiency of the stator unit and the whole electromagnetic drive system. This allows higher speeds of the shuttles and higher payloads by applying the same drive current to the drive coils of the stator unit. Furthermore, additional cooling measures (e.g., water cooling) can be reduced or dispensed due to the reduction in losses and the reduced heat generation. It may also be possible to increase the power output at higher speeds or to increase the maximum speed for moving the shuttles on the stator unit, wherein the heat generation is maintained at the same level.

For a further reduction of the losses, it may be advantageous, when the cross-connection of the at least one winding is also divided into at least two sub-conductors running essentially parallel to each other. So, the conductors of the elongated flat coil, i.e., forward-conductors, return-conductors and/or cross-connections can be divided into sub-conductors in any desired way, at least partially. I.e., that the conductors of the elongated flat coils can be partially divided and can, for example, have sections with sub-conductors and without sub-conductors. The conductors can be completely divided into at least two sub-conductors. I.e., that a conductor consists entirely of at least two separate sub-conductors or is divided into at least two sub-conductors over its entire length, for example.

Furthermore, it is advantageous, when the forward-conductor and the return-conductor are both completely divided into at least two sub-conductors, and when each of the at least two sub-conductors of the forward-conductor is electrically connected to one of the at least two sub-conductors of the return-conductor by one of the at least two sub-conductors of the cross-connection. This leads to an elongated flat coil having a winding, which is completely divided into sub-conductors forming at least two sub-windings. These sub-windings can be applied with the drive current controlled by a common stage of the control arrangement. Ideally, an inductance is inserted in the connection between the two sub-windings and the common stage of the control arrangement, to further reduce eddy current losses.

In a preferred embodiment of the stator unit, the elongated flat coil used as a drive coil in the electromagnetic drive system comprises at least one further winding layer, in addition to the at least one winding layer. The at least one further winding layer is electrically insulated by a layer of the electrically non-conductive insulating medium from the winding layer. At least one further winding is arranged in the at least one further winding layer, which also comprises a forward-conductor and a return-conductor being electrically connected by a cross-connection. I.e., that the elongated flat coil comprises at least two or more winding layers, each with at least one winding. The at least one further winding of the at least one further winding layer is electrically connected to the at least one winding of the winding layer. Furthermore, the forward-conductor and/or the return-conductor of the at least one further winding are at least partially divided into at least two sub-conductors arranged next to each other in parallel in the at least one further winding layer. In this way, the eddy current losses and heat loss in an elongated flat coil with two or more winding layers can be reduced very easily, whereby the conductors of the winding and the at least one further winding can be subdivided into at least two sub-conductors as required.

Furthermore, it is also possible that the cross-connection of the at least one further winding is also divided into two sub-conductors running in parallel to each other. This provides further flexibility to adapt the elongated flat coil as required.

In an appropriate embodiment of the stator unit, the forward-conductor of the at least one further winding and the return-conductor of the at least one further winding are each completely divided into at least two sub-conductors, wherein each of the at least two sub-conductors of the forward-conductor of the at least one further winding is electrically connected to one of at least two sub-conductors of the return-conductor by one of the at least two sub-conductors of the cross-connection of the at least one further winding. Thus, at least two parallel sub-windings are also created from the at least one winding of the at least one further winding layer for further loss reduction. These at least two parallel sub-windings can ideally be electrically connected to the at least two parallel sub-windings, formed by the sub-conductors of the forward-conductor, the return-conductor and the cross-connection of the at least one winding of the winding layer. Therefore, each of the at least two sub-conductors of the return-conductor of the at least one winding of the winding layer is connected to exactly one of the at least two sub-conductors of the forward-conductor of the at least one further winding of the at least one further winding layer.

In another preferred embodiment of stator unit, furthermore, one of the at least two sub-conductors of the forward-conductor of the at least one winding of the winding layer is electrically connected to one of the at least two sub-conductors of the return-conductor of the at least one further winding of the at least one further winding layer. Thus a coil is created with at least two winding layers, wherein the sub-windings created by the division of all conductors - i.e., forward- and return-conductors and cross-connections - of the respective windings on the at least two winding layers are electrically connected in series.

In another preferred embodiment of stator unit, one of the at least two sub-conductors of the return-conductor of the at least one winding of the winding layer is electrically connected to one of the at least two sub-conductors of forward-conductor of the at least one winding of the winding layer via an additional cross-connection and one of the at least two sub-conductors of the return-conductor of the at least one further winding of the at least one further winding layer is electrically connected to one of the at least two sub-conductors of forward-conductor of at least one further winding of the at least one further winding layer via another additional cross-connection. Furthermore, the other of the at least two sub-conductors of the return-conductor of the at least one winding of the winding layer is electrically connected to another of the at least two sub-conductors of the forward-conductor of the at least one further winding of the at least one further winding layer. Thus, a coil is created with at least two winding layers having at least two parallel sub-windings created by the division of all conductors of the at least one winding of the respective winding layers. One of the at least two sub-windings created by dividing the conductors of each winding layer is electrically connected to the other of the at least two sub-windings of the same winding layer via an additional cross-connection. In addition, the other of the at least two sub-windings of the winding layer is electrically connected to the other of the two sub-windings of the at least one further winding layer. In this way, the at least two sub-windings of a respective winding layer are connected to each other in series, as are the at least two winding layers.

Furthermore, it is advantageous, when the sub-conductors, into which the forward-conductors, the return-conductors and/or the cross-connections of the respective windings divided on the respective winding layers, are separately arranged on the insulating medium being electrically insulated from each other to prevent crosscurrents between the sub-conductors.

Alternatively, it may be advantageous, when the sub-conductors, into which the respective forward-conductor, the respective return-conductor and/or the respective cross-connection are divided, are incompletely separated from each other. I.e., that there is only a score between the at least two sub-conductors or that a small trace of electrically conductive material (e.g., copper), normal to the main flow direction of the drive current still links the at least two sub-conductors. The score or the trace can be designed in such a way that the ohmic resistance between the at least two sub-conductors is so great that a possible crosscurrent is reduced to a minimum. In this case, too, the eddy current losses are reduced.

In a preferred embodiment of the stator unit, the respective forward-conductor and the respective return-conductor are arranged in a main layer and the respective cross-connection is arranged in a secondary layer. The main layer and the secondary layer form the respective winding layer, and they are electrically insulated from each other by the electrically non-conductive insulating medium. Interlayer connections are provided to connect the respective forward-conductor and the respective return-conductor with the respective cross-connection. In case, a carrier substrate is used as insulating medium, as with elongated PCB coils, for example, the insulating medium provides the interlayer connections, which may be configured as vertical interconnect accesses or short vias, for example. Furthermore, the forward-conductor and the return-conductor of the respective winding can be arranged on a first side of the layer of the insulating medium or carrier substrate, forming the main layer of the winding layer. The associated cross-connection of the respective winding can be arranged on a second side - opposite to the first side - of the layer of the insulating medium, forming the secondary layer of the winding layer. The layer of the insulating medium then provides vias to electrically connect the forward-conductor, the return-conductor with cross-connection of the respective winding. Additionally, it is possible that a forward-conductor and a return-conductor of at least one further elongated flat coil, forming the main layer of that further elongated flat coil, are arranged on the second side of the insulating medium, on which the at least one cross-connection, forming the secondary layer, of the elongated flat coil is arranged, to build a place-saving and compact coil arrangement.

Furthermore, in a preferred embodiment of the stator unit, the elongated flat coils used as drive coils are configured as elongated printed circuit board coils or short elongated PCB coils. The forward-conductors, the return-conductors and the cross-connections forming the coiled structure or windings of the PCB coil, are created directly by traces etched from one or more conductive layers electrically conductive material (e.g., copper), which is laminated onto or between the layers of the electrically non-conductive insulating medium, usually a carrier substrate like e.g., fiber-reinforced plastic or synthetic material. This means that the drive coils can be arranged on the stator unit very space-saving.

Furthermore, the objective mentioned above, and other objectives are achieved by an electromagnetic drive system, which comprise at least one stator unit according to the invention and at least one shuttle comprising a magnet unit with drive magnets, wherein the drive coils arranged on the at least one stator unit are energized in the in the area of the at least one shuttle by a drive current to generate an electromagnetic field, which interacts with the drive magnets of the magnet unit of the least one shuttle to move the at least one shuttle.

The electromagnetic drive system can be configured as a long stator linear motor system, wherein the elongated flat coils used as drive coils are arranged on the at least one stator unit according to the invention along a predefined movement path of the at least one shuttle, or as a planar motor system, wherein the elongated flat coils used as drive coils are arranged in at least two coil groups on the at least one stator unit according to the invention and wherein each of the at least two coil groups defines a main direction of movement of the at least one shuttle. However, it is also possible for the stator unit according to the invention to be used in any other electromagnetic drive systems (e.g. short stator linear motor system, linear drive systems, synchronous linear motor actuators, etc.).

### BRIEF DESCRIPTION OF THE DRAWINGS

In the following, the present invention will be described in greater detail with reference to Figs. 1 to 5c, which show exemplary, schematic and non-limiting advantageous embodiments of the invention. In the drawings:
Fig. 1 shows at least a section of an embodiment of an electromagnetic drive system in the form of a long stator linear motor system comprising at least one stator unit according to the invention;
Fig. 2 shows another embodiment of the electromagnetic drive system in the form of a planar motor system comprising at least one stator unit according to the invention from a side view;
Fig. 3a and 3b show different views of an embodiment of an exemplary elongated coil used as drive coil in the stator unit according to the invention;
Fig.4 shows another embodiment of the exemplary elongated coil used as drive coil in the stator unit according to the invention;
Fig. 5a to 5c show different embodiments of an exemplary elongated coil with at least two winding layers used as drive coil in the stator unit according to the invention from a perspective view.

### DETAILED DESCRIPTION

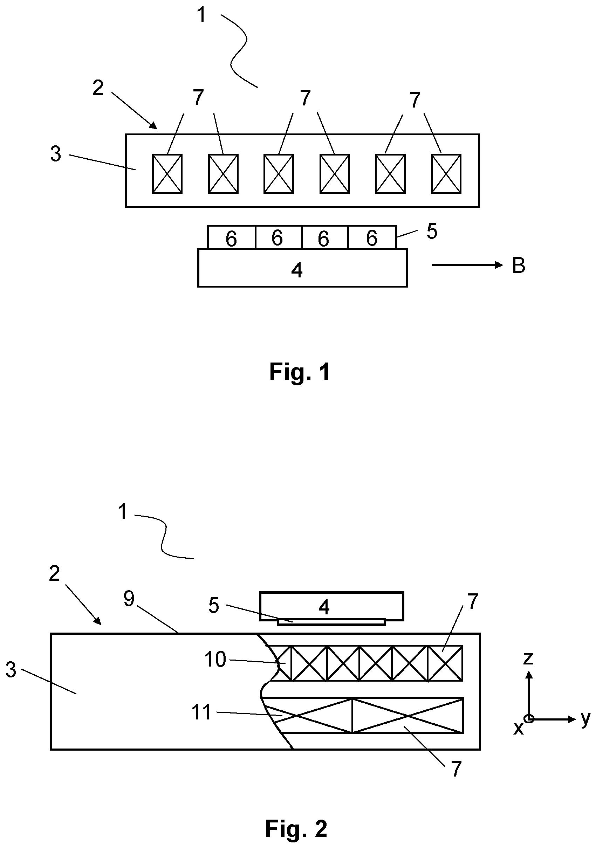

Fig. 1 schematically shows an exemplary embodiment of an electromagnetic drive system 1 in the form of a long stator linear motor system. In particular, Fig. 1 shows a cross-section through a section of the long stator linear motor system 1 in the area of the stator 2 and through a shuttle 4 moving along the stator 2 for reason of clarity.

The long stator linear motor 1 has a stator 2, which comprises at least one stator unit 3. Usually, the stator 2 consists of a plurality of stator units 3, which may have different geometries or configurations (e.g., straight lines, curves, switches, etc.) and can be assembled to form the stator 2 of any shape and/or length. The stator 2 forms the movement path or movement track of the long stator linear motor 1. During operation, at least one shuttle 4, usually a plurality of shuttles 4, is moved along the movement path or movement track in a direction of movement B (e.g., in the direction of the x-axis of a reference coordinate system of electromagnetic drive system 1).

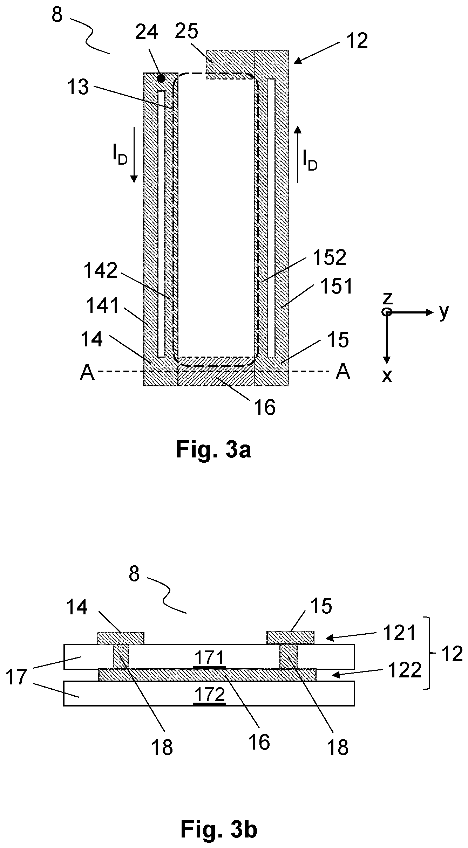

The shuttle 4 comprises a magnet unit 5, which is arranged on a side of the shuttle 4 facing the surface of the stator 2 or the respective stator unit 3, for example. The magnet unit 5 comprises drive magnets 6, which are usually permanent magnets. To move the shuttle 4 along the stator 2 or along the at least one stator unit 3, the stator units 3 forming the stator 2 comprise a plurality of drive coils 7, which are configured as elongated flat coils 8, for example. An elongated flat coil 8 comprises conductors 14, 15, 16, 21, 22, 23 arranged one or more winding layers 12, 19 being electrically insulated from each other by one or more layers of an electrically non-conductive insulating medium 17, as will be explained in detail below with reference to Figs. 3a and 3b. For example, the drive coils 7 can be constructed as concentrated or distributed windings and/or as single-layer or multi-layer windings, wherein the individual windings 13, 20 can be connected in series or in parallel. Furthermore, the drive coil can be interconnected to form a multi-phase system, usually a 3-phase system with a floating star point or a star point connected to a predefined fixed potential.

The drive coils 7 are arranged next to each other in the direction of movement B, for example, stationary on the respective stator unit 3. The drive coils 7 are energized by applying a drive current I_{D} controlled by a control arrangement. The control of the movement of the shuttle 4 along the movement path or along the stator 2 and the related control of the drive coils 7 involved are well known, for example, for EP 3 385 110 A1 or EP 3 376 166 A1, and therefore will not be explained in detail here. In principle, the drive coils 7 in the area of the at least one shuttle 4 are energized by applying the drive current I_{D} under an appropriate control of the control arrangement to generate a moving drive magnetic field. This drive magnetic field interacts with drive magnets 6 of the magnet unit 5 arranged on the shuttle 4, causing a movement of the shuttle 4 in the direction of movement B. Thus, the shuttle 4 and an object transported by the shuttle 4 can be moved to a predetermined position along the movement track or movement path formed by the stator 2.

Alternatively, the electromagnetic drive system 1 can also be configured as a planar motor system 1. Fig. 2 shows an exemplary embodiment of an electromagnetic drive system 1 in the form of a planar motor system 1 in a partially cutaway sideview. The planar motor system 1 also comprises a stator 2, which comprises at least one stator unit 3. The stator 2 forms a movement plane 9, wherein the size and shape of the movement plane 9 is defined by the number, shapes and arrangement of the stator units 3 forming the stator 2 and wherein the movement plane 9 can be aligned arbitrarily in space or in relation to the reference coordinate system x, y, z of the electromagnetic drive system 1. Fig. 2 only shows one exemplary stator unit 3 according to the invention forming the stator 2, for the sake of simplicity. However, numerous stator units 3 can be aligned to form the stator 2 and a larger movement plane 9.

At least one shuttle 4 of the planar motor system 1 can be moved on the movement plane 9 at least two-dimensionally, for example in direction of the x-axis and in the direction of the y-axis of the reference coordinate system of the electromagnetic drive system 1, but also more complex movements of the shuttle 4 are possible, including e.g., lifting, lowering and rotation in relation to a z-axis of the reference coordinate system, tilting (in relation to the x- and y-axis of the reference coordinate system), or any combination of those movement in the movement plane 9. For this purpose, the stator unit 3 comprises several drive coils 7.

The drive coils 7 are configured as elongated flat coils 8, for example, as with the electromagnetic drive system 1 in the form of a long stator linear motor. Each elongated flat coil 8 comprises conductors 14, 15, 16, 21, 22, 23 arranged one or more winding layers 12, 19 being electrically insulated from each other by one or more layers of an electrically non-conductive insulating medium 17, as will be explained in detail below with reference to Figs. 3a and 3b.

The drive coils 7 of the first and the second drive coil group 10, 11 can be arranged and connected in various ways, if configured as elongated flat coils 8. For example, the drive coils 7 can be constructed as concentrated or distributed windings and/or as single-layer or multi-layer windings, wherein the individual windings 13, 20 can be connected in series or in parallel. Furthermore, the drive coil 7 can be interconnected to form a multi-phase system, usually a 3-phase system with a floating star point or a star point connected to a predefined fixed potential.

Furthermore, the drive coils 7 are arranged on the stator unit 3 in such a way that the shuttle 4 can perform the movements mentioned above. Usually, the drive coils 7 are arranged in drive coil groups 10, 11. Two exemplary drive coils groups 10, 11 are schematically shown in Fig. 2. A first drive coil group 10 (e.g., x-coils) may be arranged to define a first direction of movement (e.g., in the direction of the x-axis of the reference coordinate system of the electromagnetic drive system 1), for example, and a second drive coils group 11 (e.g., y-coils) may be arranged to define a second direction of movement (e.g., in the direction of the y-axis of the reference coordinate system of the electromagnetic drive system 1), for example. The drive coils 7 of the first and second drive coil group 10, 11 may be arranged relative to one another in such a way that the two directions of movement are orthogonal to each other, for example, as shown in Fig. 2. When using elongated flat coils 8, in particular in the form of elongated PCB coils, the drive coils 7 of the first drive coil group 10 and the drive coils 7 of the second drive coils group 11 are usually alternately arranged in the winding layers 12, 19, as hinted in Fig. 2, but different arrangement of the drive coils 7 of the drive coil groups 10, 11 are also possible. The arrangement of the drive coil groups 10, 11 relative to each other allows a movement of the shuttle 4, for example, along any movement path on the movement plane 9 which is defined by the x- and y-axes of the reference coordinate system of the electromagnetic drive system 1. With a corresponding structural design of the stator 2 or of the at least one stator unit 1 and of the particular shuttle 4, for example, movements can also be carried out which additionally use the other four degrees of freedom of movement at least to a limited extent - i.e. lifting and lowering in the direction of the z-axis of the reference coordinate system and rotations about the x-, y- and z-axes, as mentioned above.

The control of the movements of the at least one shuttle 4 on the movement plane 9 and the control of the involved drive coils 7 of the drive coil groups 11, 12 are sufficiently known, for example, for WO 2021/105165 A1 or WO 2021/175885 A1. In principle, the drive coils 7 of at least one of the drive coil groups 10, 11 in the area of the shuttle 4 are energized to generate a moving drive magnetic field. The movable drive magnetic field then interacts electromagnetically with drive magnets 6 of the magnet unit 5 arranged on the shuttle 4, whereby the shuttle 4 can be moved along a predefined movement path or to predetermined positions on the movement plane 9.

Fig. 3a shows an exemplary embodiment of an elongated flat coil 8 used as drive coil 7 in the stator 3 unit according to the invention from a top view perspective. The elongated flat coil 8, which may be configured as an elongated printed circuit board coil or short elongated PCB coil, comprises the conductors 14, 15, 16, which are arranged in at least one winding layer 12 on an insulating medium 17 (not shown in Fig. 3a for reasons of clarity). The conductors 14, 15, 16 are of electrically conductive material, like e.g., copper, aluminum, etc.. The insulating medium 17 can be an electrically non-conductive material (e.g., fiber-reinforced plastic or synthetic material, ceramics, plastic foil, etc.,), which may also be magnetically essentially non-conductive, but it is also possible that air is used as insulating medium 17 or that the conductors 14, 15, 16 are coated by the insulating medium 17.

The conductors 14, 15, 16 are arranged in at least one winding 13, which consists of a forward-conductor 14 and a return-conductor 15. The forward-conductor 14 and the return-conductor 15 are electrically connected by a cross-connection 16. The forward-conductor 14, the return-conductor 15 and the cross-connection 16 may be arranged on the same layer 171 of the insulating medium 17. In particular, with elongated PCB coils, the forward-conductor 14 and the return-conductor 15 can also be arranged in a main layer 121 and the cross-connection 16 is arranged in a secondary layer 122, the main layer 121 and the secondary layer 122 forming the winding layer 12 together and being separated and electrically insulated by a layer of the insulating medium 17, as exemplary shown in Fig. 3b, to realize more compact coils 8, for example.

Fig. 3b shows a cross-section view of the exemplary elongated flat coil 8 shown in Fig. 3a along the cutting line A-A. The forward-conductor 14 of the winding 13 as well as the return-conductor 15 of the winding 13 are arranged on a first side of a layer 171 of the insulating medium 17, for example. The associated cross-connection 16 is arranged on another layer 172 of the insulating medium 17 and/or on a second side of the layer 171 of the insulating medium 17, which is opposite to the first side of the layer of the insulating medium 17, on which the forward-conductor 14 and the return-conductor 15 are arranged. The connection between the forward-conductor 14 and the cross-connection 16 as well as the connection between the return-conductor 15 and the cross-connection 16 are made via interlayer connections 18, which are provided in the layer 171 of the insulating medium 17. An interlayer connection 18 can be designed as vertical interconnection access 18 (short: via) in an elongated flat coil 8 in the form of an elongated PCB coil, for example. A via 18 is an electrical connection between conductors 14, 15, 16 arranged on different layers 171, 172 and/or sides of a layer 171 of the electrically non-conductive insulating medium 17. Essentially, a via 18 is a small, drilled hole that goes at least through the layer 171 of the electrically non-conductive insulating medium 17. The hole is plated with electrically conductive material (e.g., copper) to form an electrical connection through the insulating layer 171 of the carrier material 17.

To build place-saving and compact coil arrangements, the second side of the layer 171 of the insulating medium 17, can be used for a winding layer of a further elongated flat coil 8. E.g., a main layer with at least one forward-conductor and return-conductor of the winding layer of the further elongated flat coil 8 may be arranged on the second side of the layer 171 of the insulating medium 17 - separated from the cross-connection 16 of the winding layer 13 of the elongated flat coil 8. An associated cross-connection forming the secondary layer of the winding layer of the further elongated flat coil 8 may be arranged on another layer of the insulating material 17 of e.g., a multilayer coil arrangement. Alternatively, it is also possible that the secondary layer of the winding layer of the further elongated flat coil 8 is arranged on the first side of the layer 171 of the insulating medium 17 - separated from the main layer 121 of the elongated flat coil 8, for example.

As shown in Fig. 3a, the forward-conductor 14 and the return-conductor 15 are at least partially divided into two exemplary sub-conductors 141, 142, 151, 152, but it is possible that the forward-conductor 14 and/or the return-conductor 15 are divided into more than two sub-conductors 141, 142, 151, 152. The sub-conductors 141, 142 of the forward-conductor 14 are arranged in parallel next to each other and parallel to the main flow direction of energizing drive current I_{D}, wherein the drive current I_{D} flows through the forward-conductor 14 in a main flow direction in the direction of the x-axis of the reference coordination system of the electromagnetic drive system 1, for example. The sub-conductors 151, 152 of the return-conductor 15 are also arranged in parallel next to each other and parallel to the to the main flow direction of energizing drive current I_{D}, wherein the drive current I_{D} flows through the return-conductor 15 in a main flow direction against the direction of the x-axis of the reference coordination system of the electromagnetic drive system 1, for example.

The elongated flat coil 8 also comprises at least one connector 24 and/or connecting conductor 25, via which the energizing drive current I_{D} can be applied and controlled by a respective stage of the control arrangement of the electromagnetic drive system 1. The connector 24 may be arranged in that it is connected to an end of the forward-conductor 14, which is not connected to the cross-connection 16. The connector 24 may be configured in that way that the respective stage of the control arrangement can be connected to the elongated flat coil 8 - for example, in the form of a plug contact, a pin or similar. The connecting conductor 25 may be arranged on the secondary layer 122 of the winding layer 12, for example, and arranged in such a way that it is connected e.g. by an interlayer connection 18 or via 18 to an end of the return-conductor 15, which is not connected to the cross-connection 16. Alternatively, the end of the return-conductor 15, being not connected to the cross-connection 16, can also be provided with a connector 24 (not shown in Fig. 3a). In particular in a single-phase system, the connector 24 of the forward-conductor 14 and the connector 24 of the return-conductor 15 or the connecting conductor 25 connected to the return-conductor 15 are used to apply and control the drive current ID by the respective stage of the control arrangement. In a multi-phase system (e.g., 3-phase system), the connecting conductor 25 connected to the return-conductor 14 or the connector 24 of the return-connector 14 may be used for the connection to a conductor of a further drive coil 7 of the coil arrangement or to a star point, if the drive coils 7 are arranged in a star configuration.

The sub-conductors 141, 142, 151, 152 of the forward-conductor 14 and/or the return-conductor 15 can be separately arranged on the insulating medium 17 with a gap between the at least two sub-conductors 141, 142, 151, 152 to insulate the sub-conductors 141, 142, 151, 152 from each other, as exemplary shown in Fig. 3a. Alternatively, it is also possible that the sub-conductors 141, 142, 151, 152 of the forward-conductor 14 and/or the return-conductor 15 are incompletely separated with a thin layer of electrically conductive material (e.g., copper) still linking the sub-conductors 141, 142, 151, 152. I.e., the sub-conductors 141, 142, 151, 152 are only separated by a score or notch in the forward-conductor 14 and/or return-conductor 15. The thin layer left between the sub-conductors 141, 142, 151, 152 extends normal to the main flow direction of the drive current I_{D} and can be designed in such a way that the ohmic resistance between the at least two sub-conductors 141, 142, 151, 152 is so great that a possible crosscurrent, flowing through the thin layer, is reduced to a minimum.

The subdivision of the forward-conductor 14 and/or the return-conductor 15 into sub-conductors 141, 142, 151, 152 can be uniform and into one section of subdivision only, as shown in Fig. 3a, for example. However, it is also possible to divide the forward-conductor 14 and/or the return-conductor 15 non-uniform or differently into sub-conductors 141, 142, 151, 152, e.g., the forward-conductor 14 being divided into sub-conductors 141, 142 and the return-conductor 15 being undivided or vice versa. The subdivision of the forward-conductor 14 and/or the return-conductor 15 into sub-conductors 141, 142, 151, 152 can, for example, also be carried in more than one section, whereby divided and undivided sections may alternate.

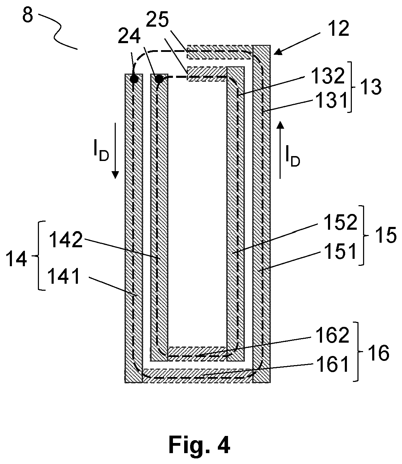

Additionally, also the cross-connection 16 of the winding 13 may be divided into two or more sub-conductors 161, 162 (as shown in Fig. 4) - at least partially. The division of the cross-connection 16 into sub-conductors 161, 162 can also be in one section or in more sections or over the entire length of the cross-connection 16. The sub-conductors 161, 162 are again arranged parallel to one another on the insulating medium 17, whereby the sub-conductors 161, 162 can be either completely separated by an insulating gap or incompletely separated.

The division of at least the forward-conductor 14 and/or the return-conductor 15 of elongated flat coil 8, used as drive coil 7 in the stator unit 3, into sub-conductors 141, 142, 151, 152 can reduce the losses, in particular eddy current losses and heat losses, during operation of the electromagnetic drive system 1. When one or more shuttles 4 are moved on the stator 2, in particular with medium and/or high speed, over the drive coils 7 arranged on the stator 2, the eddy currents losses are reduced, which are generated by the eddy currents induced in the drive coils 7 by the magnetic field of magnetic unit 5 of the shuttles 4.

The elongated flat coil 8 used as drive coil 7 in the stator unit 3, exemplary shown in Figs. 3a and 3b, is configured as an elongated printed circuit board coil or short elongated PCB coil, for example. However, any other form of an elongated flat coils 8 may be used as drive coil 7. For example, an elongated flat coil 8 can be used, which has conductors 14, 15, 16 in an elongated and flat shape, forming the at least one winding 13, and air or a plastic foil as insulating medium 17. It is also possible that the conductors 14, 15, 16 forming the at least one winding 13 are coated with an oxidation layer for isolation.

Fig. 4 shows another embodiment of the elongated flat coil 8, e.g., in the form of a PCB coil, which can be used as drive coil 7 arranged on the stator unit 3 of the electromagnetic drive system 1 from top view perspective. The elongated flat coil 8 again comprises conductors 14, 15, 16, which are arranged in at least one winding layer 12 on an insulating medium 17 (not shown in Fig. 4). The conductors 14, 15, 16 again comprise the forward-conductor 14 and the return-conductor 15, which are arranged in the main layer 121 of the winding layer 12, and the cross-connection 16, which is arranged in the secondary layer 122 of the winding layer 12 and electrically connects the forward-conductor 14 and the return-conductor 15. However, it is also possible that the forward-conductor 14, the return-conductor 15 and the cross-connection 16 are arranged on the same layer 171 of the insulating medium 17.

In the embodiment of the elongated flat coil 8 shown in Fig. 4, the forward-conductor 14 as well as the return-conductor 15 are completely divided into two exemplary sub-conductors 141, 142, 151, 152, but it is also possible that both conductors 14, 15 are divided into more than two sub-conductors 141, 142, 151, 152, wherein "completely divided" means that the respective conductor 14, 15 is divided into sub-conductors 141, 142, 151, 152 over its entire length. In other words, the forward-conductor 14 is formed by two (or more) sub-conductors 141, 142 which run parallel to one another over the entire length of the forward-conductor 14, and the return-conductor 15 is also formed by two (or more) sub-conductors 151, 152 which run parallel to one another over the entire length of the return-conductor 15.

Additionally, the cross-connection 16 is also completely divided into two (or more) sub-conductors 161, 162, wherein the number of sub-conductors 161, 162 of the cross-connection 16 depends on the number of sub-conductors 141, 142, 151, 152 of the forward-conductor 15 and the return-conductor 16. Furthermore, each of the two (or more) sub-conductors 141, 142 of the forward-conductor 14 is electrically connected to one of the two (or more) sub-conductors 151, 152 of the return-conductor 15 by one of the two (or more) sub-conductors 161, 162 of the cross-connection 16. In other words, the forward-conductor 14, the return-conductor 15 and the cross-connection 16 of the elongated flat coil 8, as shown in Fig. 4, each are completely divided into two sub-conductor 141, 142, 151, 152, 161, 162. A first sub-conductor 141 of the forward-conductor 14 is electrically connected to a first sub-conductor 151 of the return-conductor 15 via a first sub-conductor 161 of the cross-connection 16 and a second sub-conductor 142 of the forward-conductor 14 is electrically connected to a second sub-conductor 152 of the return-conductor 15 via a second sub-conductor 162 of the cross-connection 16. This leads to an elongated flat coil 8 having a winding 13, which is completely divided into sub-conductors 141, 142, 151, 152, 161, 162, wherein the respective sub-conductors 141, 142, 151, 152, 161, 162 form sub-windings 131, 132, through which the drive current I_{D} may flow in parallel. The elongated flat coil 8 again comprises connectors 24, e.g. connected to the sub-conductors 141, 142 of the forward-conductor 14, and/or connecting conductors 25, e.g. connected to the sub-conductors 151, 152 of the return-conductor 15, to apply the drive current I_{D}. Therefore, the sub-windings 131, 132 of the winding 13 may be controlled either by a common stage of the control arrangement of the electromagnetic drive system 1. An inductance may be inserted into the connection, e.g. linking the connectors 24 of the sub-conductors 141, 142 of the forward-conductor 14, to the stage of the control arrangement to further reduce eddy currents.

In a single-phase system, the connectors 24 and/or connecting conductors 25 provided may be connected to the common stage of the control arrangement. In a multi-phase system, the connectors 24 of the sub-conductors 141, 142 of the forward conductor 14 may be connected to the common stage of the control arrangement to apply the drive current I_{D} to the elongated flat coil 8, wherein the connecting conductors 25 connected to sub-conductors 151, 152 of the return-conductor 15 may be linked to a further drive coil 7 of the coil arrangement or to the star-point of a star-configuration, for example. The sub-conductors 151, 152 of the return-conductor 15 may be connected to connectors 24 instead of connecting conductors 25, for example.

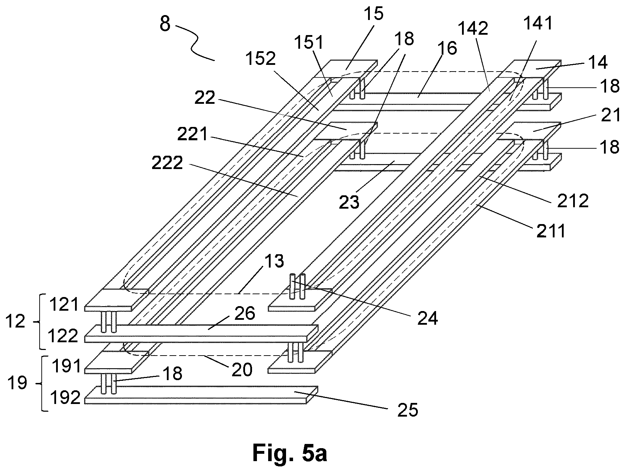

Fig. 5a shows exemplary another embodiment of an elongated flat coil 8, which is used as drive coil 7 in the stator unit 3 of the electromagnetic drive system 1, in a perspective view. The elongated flat coils 8 may be configured as elongated PCB coil, for example. The elongated flat coil 8 comprises the winding layer 12 with at least one winding 13 and additionally at least one further winding layer 19 with at least one further winding 20. I.e., that the elongated flat coil 8 can comprise two or more winding layers 12, 19, each with one or more windings 13, 20 per winding layer 12, 19. In the embodiment shown in Fig. 5a, only two exemplary winding layer 12, 19, each with only one exemplary winding 13, 20 per winding layer 12, 19, are shown, for reasons of clarity, wherein the winding layer 12 forms a first winding layer 12 with the at least one winding 13 forming a first winding 13 and the at least one further winding layer 19 forms a second winding layer 19 with a second winding 20. The first winding layer 12 and second winding layer 19 both are electrically insulated by the insulating medium 17 (not shown in Fig. 5a).

The first winding 13 is arranged in the first winding layer 12 of the elongated flat coil. The first winding 13 again comprises the forward-conductor 14 and the return-conductor 15, for example being arranged in the main layer 121 of the first winding layer 12, and the cross-connection 16, which electrically connects the forward-conductor 14 and the return-conductor 15 and which is arranged in the secondary layer of the first winding layer 12, for example. The main layer 121 and the secondary layer 122 form the first winding layer 12, wherein the main layer 121 and the secondary layer 122 of the first winding layer 12 are electrically separated by e.g. the layer 171 of the insulating medium 17 (e.g. as shown in Fig. 3b). The connection between the forward-conductor 14 and the cross-connection 16 and the connection of the return-conductor 15 and the cross-connection 16 can be realized by interlayer connections 18, in particular by vias 18.

In the second winding layer 19 of the elongated flat coil 8, the second winding 20 is arranged, which also comprises a forward-conductor 21 and a return-conductor 22, which are again electrically connected by a cross-connection 23. As with the first winding layer 12, the forward-conductor 21 and the return-conductor 22 of the second winding 20 can be arranged in a main layer 191 of the second layer 19 and the cross-connection 23 of the second winding 20 can be arranged in a secondary layer 192 of the second winding layer 19. The main layer 191 and the secondary layer 192 form the second winding layer 19 and are also electrically separated by e.g. a layer of the insulating medium 17 (e.g. as shown in Fig. 3b). The connection between the forward-conductor 21 and the cross-connection 23 of the second winding 20 and the connection of the return-conductor 22 and the cross-connection 23 of the second winding 20 can be realized by interlayer connections 18, in particular by vias 18.

Additionally, the first winding 13 and the second winding 20 of the elongated flat coil 8 are electrically connected. For this purpose, an end of the return-conductor 15 of the first winding 13, which is not connected to the cross-connection 16 of the first winding 13, is connected to an end of the forward-conductor 21 of the second winding 20, which is not connected to the cross-connection 23 of the second winding 20, via an interlayer cross-connection 26. The interlayer-cross-connection 26 can be arranged in the secondary layer of the first winding layer 12, for example, to realize more compact coils 8, for example. Furthermore, the elongated flat coil 8 also comprises at least one connector 24 and/or connecting conductor 25 to apply the drive current I_{D} to the elongated flat coil 8. For example, the at least one connector 24 may be connected to an end of the forward-conductor 14 of the first winding 13, which is not connected to the cross-connection 16 of the first winding 13. The at least one connecting conductor 25 may be arranged in such a way, for example, that it is connected e.g. by an interlayer connection 18 or via 18 to an end of the return-conductor 22 of the second winding 20, which is not connected to the cross-connection 23 of the second winding 20. The connecting conductor 25 may be arranged in the secondary layer 192 of the second winding layer 19, for example. Alternatively, the return-conductor 22 may also be connected to a connector 24, instead of the connecting conductor 25.

Furthermore, the forward-conductor 14 and/or the return-conductor 15 of the first winding can be at least partially divided into at least two sub-conductors 141, 142, 151, 152, as already described with reference to Fig. 3a. Additionally, the forward-conductor 21 and/or the return-conductor 22 of the second winding 20 may also be at least partially divided into at least two sub-conductors 211, 212, 221, 222. The sub-conductors 211, 212, 221, 222 of the forward-conductor 21 and the return-conductor 22 of the second winding 20 are arranged next to each other in parallel in the second winding layer 19, in particular in the main layer 191 of the second winding layer 19.

In the embodiment shown in Fig. 5a, the forward-conductors 14, 21 and the return-conductor 15, 22 of both windings 13, 20 are divided into sub-conductors 141, 142, 151, 152, 211, 212, 221, 222, for example. But it is also possible that only the forward-conductors 14, 21 and/or the return-conductors 15, 22 of one of the windings 13, 20 are divided into sub-conductors 141, 142, 151, 152, 211, 212, 221, 222. For example, either the forward-conductor 14 or return-conductor 15 or both conductors 14, 15 of the first winding 13 arranged in the first winding layer 12 can be divided into sub-conductors 141, 142, 151, 152, or either the forward-conductor 21 or return-conductor 22 or both conductors 21, 22 of the second winding 20 arranged in the second winding layer 19 can be divided into sub-conductors 211, 212, 221, 222, leaving the forward-conductors 14, 21 and/or the return-conductors 15, 22 of the respective other winding undivided. Furthermore, it is possible that the subdivision of the forward-conductors 14, 21 and/or the return-conductors 15, 22 into sub-conductors 141, 142, 151, 152, 211, 212, 221, 222 can be uniform and into one section of subdivision only, as shown in Fig. 5a, for example. However, it is also possible to divide the forward-conductors 14, 21 and/or the return-conductors 15, 22 non-uniform or into more sections of sub-conductors 141, 142, 151, 152, 211, 212, 221, 222.

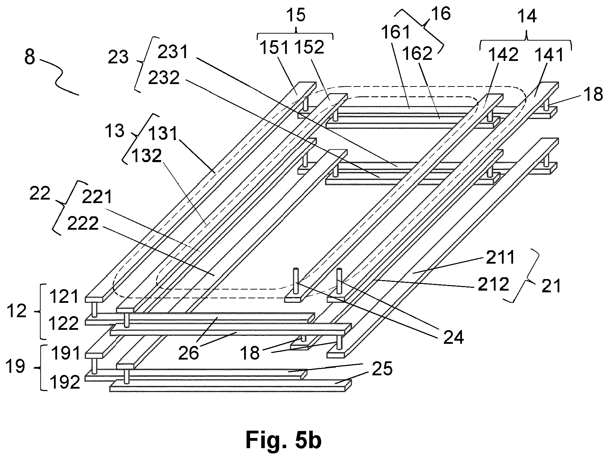

Additionally, also the cross-connections 16, 23 of the windings 13, 20 may be divided into two or more sub-conductors 161, 162, 231, 232 (as shown in Fig. 5b) - at least partially. The division of the cross-connections 16, 23 into sub-conductors 161, 162, 231, 232 can also be in one section or in more sections or over the entire length of the respective cross-connection 16, 23. The sub-conductors 161, 162, 231, 232 of the respective cross-connection 16, 23 are again arranged parallel to one another on the insulating medium 17 in the respective winding layer 12, 19.

Fig. 5b shows exemplary another embodiment of an elongated flat coil 8, which is used as drive coil 7 in the stator unit 3 of the electromagnetic drive system 1, in a perspective view.

The embodiment of the elongated flat coil 8 shown in Fig. 5b also comprises two exemplary winding layers 12, 19 comprising two exemplary windings 13, 20 (not explicitly marked in Fig. 5b). The forward-conductor 14, 21 and return-conductor 15, 22 of the respective (i.e. first and second) winding 13, 20 are again arranged, e.g. in the main layer 121, 191 of respective (first or second) winding layer 12, 19. The cross-connection 16, 23 of the respective (i.e. first and second) winding 13, 20, connecting the respective forward-conductor 14, 21 with the respective return-conductor 15, 22, are again arranged e.g. in the secondary layer 122, 192 of the respective (i.e., first or second) winding layer 12, 19. As already described with reference to Fig. 4, the forward-conductor 14, the return-conductor 15 and the cross-connection 16 of the first winding 13 are completely divided into at least two sub-conductors 141, 142, 151, 152, 161, 162. Additionally, the forward-conductor 21, the return-conductor 22 and the cross-connection 23 of the second winding 20 are also divided into sub-conductors 211, 212, 221, 222, 231, 232 in the same manner. I.e., the forward-conductor 21, the return-conductor 22 and the cross-connection 23 of the second winding 20, each is completely divided into two or more sub-conductors 211, 212, 221, 222, 231, 232. In the embodiment exemplary shown in Fig. 5b, the forward-conductor 14, the return-conductor 15 and the cross-connection 16 of the first winding 13 and the forward-conductor 21, the return-conductor 22 and the cross-connection 23 of the second winding 20, all are divided into two sub-conductors 141, 142, 151, 152, 161, 162, 211, 212, 221, 222, 231, 232.

This leads to an elongated flat coil 8 having a winding 13, 20 on each winding layer 12, 19, which is completely divided into sub-conductors 141, 142, 151, 152, 161, 162, 211, 212, 221, 222, 231, 232. The respective sub-conductors 141, 142, 151, 152, 161, 162, 211, 212, 221, 222, 231, 232 form sub-windings on the respective winding layer 12, 19. As shown in Fig. 5b, the sub-conductors 141, 142, 151, 152, 161, 162 of the first winding 13 or of the first winding layer 12 form two sub-windings 131, 132, through which the drive current I_{D} may flow in parallel. Additionally, the sub-conductors 211, 212, 221, 222, 231, 232 of the second winding 20, formed by the forward-conductor 21, the return-conductor 22 and the associated cross-connection 23, or of the second winding layer 19 also form two sub-windings (not explicitly marked in Fig. 5b) through which the drive current I_{D} may also flow in parallel.

If the interlayer cross-connection 26 is also completely divided into sub-conductors, as shown in Fig. 5b, this leads to an elongated flat coil 8 with completely divided conductors 14, 15, 16, 21, 22, 23 26, thus forming parallel arranged sub-coils, each with at least one winding arranged on each of the at least two winding layers 12, 19, for example. The number of sub-conductors of the interlayer cross-connection 26 may depend on the number of sub-conductors 141, 142, 151, 152, 161, 162, 211, 212, 221, 222, 231, 232, into which the forward-conductors 14, 21, the return-conductors 15, 22 and cross-connections 16, 23 of the windings 13, 20 are divided.

For example, as shown in Fig. 5b, a first sub-conductor of the interlayer cross-connection 26 may electrically connect an end of a first sub-conductor 151 of the return-conductor 15 of the first winding 13, which is not connected to any of the sub-conductors 161, 162 of the cross-connection 16 of the first winding 13, to an end of a first sub-conductor 211 of the first forward-conductor 21 of the second winding 20, which is not connected to any of the sub-conductors 231, 232 of the cross-connection 23 of the second winding 20. A second sub-conductor of the interlayer cross-connection 26 then may electrically connect an end of a second sub-conductor 152 of the return-conductor 15 of the first winding 13, which is not connected to any of the sub-conductors 161, 162 of the cross-connection 16 of the first winding 13, to an end of a second sub-conductor 212 of the first forward-conductor 21 of the second winding 20, which is not connected to any of the sub-conductors 231, 232 of the cross-connection 23 of the second winding 20.

The elongated flat coil 8 again comprises connectors 24, e.g. connected to the sub-conductors 141, 142 of the forward-conductor 14 of the first winding 13 or the first winding layer 12 and/or connecting conductors 25, e.g., connected to the sub-conductors 221, 222 of the return-conductor 22 of the second winding 20 or the second winding layer 19 to apply the drive current I_{D} to the elongated flat coil 8. Alternatively, the sub-conductors 221, 222 of the return-conductor 22 may also be connected to connectors 24, instead of the connecting conductor 25. The sub-coils formed by the complete subdivision of the conductors 14, 15, 16, 21, 22, 23, 26 into sub-conductors 141, 142, 151, 152, 161, 162, 211, 212, 221, 222, 231, 232 may be controlled by a common stage of the control arrangement of the electromagnetic drive system 1 to apply the drive current I_{D} to the elongated flat coil 8. An inductance may be inserted into the connection, e.g. linking the connectors 24 of the sub-conductors 141, 142 of the forward-conductor 14 of the first winding 13, to the stage of the control arrangement to further reduce eddy currents.

Furthermore, it is possible to electrically connect one of the at least two sub-conductors 141, 142 of the forward-conductor 14 of the at least one winding 13 of the winding layer 12 to one of the at least two sub-conductors 221, 222 of the return-conductor 22 of the at least one further winding 20 of the at least one further winding layer 19 to serially connect the sub-windings 131, 132 of the windings 13, 20, which were created by completely dividing the conductors 14, 15, 16, 21, 22, 23, 26 of the elongated flat coil 8. For example, a first sub-conductor 221 of the return-conductor 22 of the second winding arranged on the second winding layer 19 may be connected to one of the two sub-conductors 141, 142 of the forward-conductor 14 of the first winding 13 arranged of the first winding layer 12. The connection can be realized by an interlayer cross-connection 26, for example, using interlayer connections 18 or vias 18.

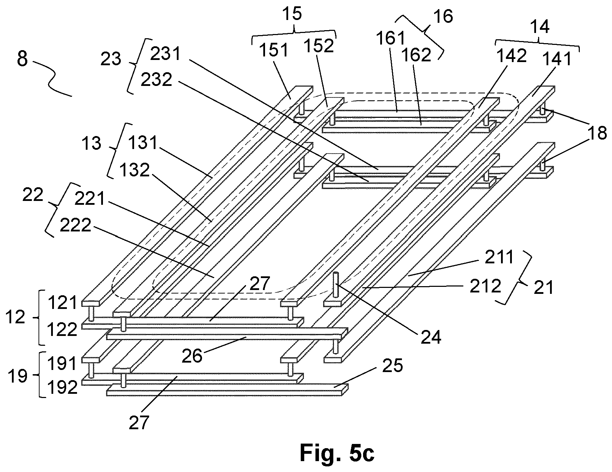

Fig. 5c shows exemplary another embodiment of an elongated flat coil 8, which is used as drive coil 7 in the stator unit 3 of the electromagnetic drive system 1, in a perspective view.

In that embodiment, the elongated flat coil 8 again comprises two exemplary winding layers 12, 19, in which the respective forward-conductors 14, 21, the respective return-conductors 15, 22 and the respective cross-connections 16, 23, linking the forward-conductors 14, 21 and the return-conductors 15, 22, are arranged to form the respective windings 13, 20 (not explicitly marked in Fig. 5c). Furthermore, all the forward-conductors 14, 21, return-conductors 15, 22 and cross-connections 16, 23 are completely divided into sub-conductors 141, 142, 151, 152, 161, 162, 211, 212, 221, 222, 231, 232. This leads to a division of each winding 13, 20 into two sub-windings 131, 132 arranged in each winding layer 12, 19 and each conductor 14, 15, 16, 21, 22, 23 comprising e.g. two sub-conductors 141, 142, 151, 152, 161, 162, 211, 212, 221, 222, 231, 232.

Furthermore, the sub-windings 131, 132 formed by the sub-conductors 141, 142, 151, 152, 161, 162, 211, 212, 221, 222, 231, 232 on each winding layer are connected in series. For this purpose, a first sub-conductor 151 of the return-conductor 15 of the first winding 13 on the first winding layer 12 is electrically connected to one of the two sub-conductors 141, 142 of the forward-conductor 14 of the first winding 13 on the first winding layer 12. An additional cross-connection 27 is used for this connection, which is arranged on the secondary layer 192 of the first winding layer 19, for example. In the embodiment shown in Fig. 5c, the first sub-conductor 141 of the forward-conductor 14 of the of the first winding 13 on the first winding layer 12 is provided with a connector 24 for applying the drive current I_{D}, for example, wherein a second sub-conductors 142 of the forward-conductor 14 of the first winding 13 on the first winding layer 12 is electrically connected to the first return-conductor 151 of the return-conductor 15 of the first winding 13 on the first winding layer 12 via the additional cross-connection 27 to connect the sub-windings 131, 132 in series.

In the same way, a first sub-conductor 221 of the return-conductor 22 of the second winding 20 on the second winding layer 19 is electrically connected to one of the two sub-conductors 211, 212 of the forward-conductor 21 of the of the second winding 20 on the second winding layer 19, wherein the other of the two sub-conductors 211, 212 of the forward-conductor 21 of the of the second winding 20 on the second winding layer 19 is electrically connected to a second sub-conductor 152 of the return-conductor 15 of the first winding 13 on the first winding layer 12 via an interlayer cross-connection 26.

In the embodiment shown in Fig. 5c, the first sub-conductor 221 of the return-conductor 22 of the second winding 20 on the second winding layer 19 is, for example, electrically connected to a first sub-conductor 212 of the forward-conductor 22 of the of the second winding 20 on the second winding layer 19, wherein a first sub-conductor 211 of the forward-conductor 21 of the of the second winding 20 on the second winding layer 19 is connected to the second sub-conductor 152 of the return-conductor 15 of the first winding 13 on the first winding layer 12 via an interlayer cross-connection 26.

Furthermore, a second sub-conductor 222 of the return-conductor 22 of the second winding 20 on the second winding layer 19 is provided with or connected to a connecting conductor 25, for example, which is used for applying the drive current I_{D} to the elongated flat coil 8.

Elongated flat coils 8, as exemplary shown in Figs. 3a to 5c, can be used as drive coils 7 in stator units 3 of various electromagnetic drive systems 1, in particular in long stator linear motor systems and/or planar motor systems. On the stator 2 or stator unit 3 of the electromagnetic drive system 1 the elongated flat coils 8 used as drive coils 7 can be arranged and connected in various ways, e.g., as coils with concentrated or distributed windings and/or as single-layer or multi-layer windings. The elongated flat coils 8 used as drive coils 7 can be arranged in single-phase systems or can be interconnected to form a multi-phase system, usually a 3-phase system with a floating star point or a star point connected to a predefined fixed potential.

In particular, if the planar motor system 1 (as shown in Fig. 2) shall provide a preferred direction of movement (e.g. in the direction of the x-axis of the reference coordinate system) for moving the shuttles 4 relative to the stator 2, the number of elongated flat coils 8 arranged on the stator 2 in one direction (e.g., in direction of the x-axis of the reference coordinate system) may be different from the number of elongated flat coils arranged on the stator in the other direction (e.g., in direction of the y-axis of the reference coordinate system). Furthermore, it may be advantageous, if only the elongated flat coils 8, which define the preferred direction of movement like e.g., x-coils or coils arranged in the direction of the x-axis of the reference coordinate system defining the direction in the x-axis as preferred direction, are designed as elongated flat coils 8 as shown in one of the Figs. 3a to 5c. I.e., only the elongated flat coils 8 defining the preferred direction of movement comprise at least a forward-conductor 14, 21 and/or a return-conductor 15, 22 being divided into at least two sub-conductors 141, 142, 151, 152, 211, 212, 221, 222 (as shown in Figs. 3a or 5a), for example, wherein the conductors 14, 15, 21, 22 of the elongated flat coils 8 arranged in the other direction (e.g., in direction of the y-axis of the reference coordinate system) on the stator 2 remain undivided.

## Claims

1. A stator unit (3) for moving at least one shuttle (4) of an electromagnetic drive system (1), wherein the stator unit (3) comprises an arrangement of drive coils (7), which are energized by a drive current (I_{D}) in an area of the at least one shuttle (4) to generate an electromagnetic field, which interacts with a magnet unit (5) arranged on the least one shuttle (4) to move the at least one shuttle (4),
and wherein the drive coils (7) are configured as elongated flat coils (8), comprising conductors (14, 15, 16, 21, 22, 23) arranged in winding layers (12, 19) being electrically insulated from each other by an electrically non-conductive insulating medium (17);
***characterized, in that*** an elongated flat coil (8) used as drive coil (7) at least comprises one winding layer (12), in which at least one winding (13) is arranged, the at least one winding (13) comprising a forward-conductor (14) and a return-conductor (15) being electrically connected with one another by a cross-connection (16), ***and in that*** the forward-conductor (14) and/or the return-conductor (15) of the at least one winding (13) are at least partially divided into at least two sub-conductors (141, 142, 151, 152) arranged next to each other in parallel in the winding layer (12).

2. The stator unit (3) according to claim 1, ***characterized, in that*** the cross-connection (16) of the at least one winding (13) is also divided into at least two sub-conductors (161, 162) running in parallel to each other.

3. The stator unit (3) according to claim 2, ***characterized, in that*** the forward-conductor (14) and the return-conductor (15) are each completely divided into at least two sub-conductors (141, 142, 151, 151), wherein each of the at least two sub-conductors (141, 142) of the forward-conductor (14) is electrically connected to one of at least two sub-conductors (151, 152) of the return-conductor (15) by one of the at least two sub-conductors (161, 162) of the cross-connection (16).

4. The stator unit (3) according to one of claims 1 to 3, ***characterized, in that*** the elongated flat coil (8) comprises at least one further winding layer (19), which is electrically insulated by the electrically non-conductive insulating medium (17) from the winding layer (12) and in which at least one further winding (20) is arranged, which also comprises a forward-conductor (21) and a return-conductor (22) being electrically connected by a cross-connection (23), the at least one further winding (20) of the at least one further winding layer (19) being electrically connected to the at least one winding (13) of the winding layer (12), ***and in that*** the forward-conductor (21) and/or the return-conductor (22) of the at least one further winding (20) are at least partially divided into at least two sub-conductors (211, 212, 221, 222) arranged next to each other in parallel in the at least one further winding layer (19).

5. The stator unit (3) according to claim 4, ***characterized, in that*** the cross-connection (23) of the at least one further winding (20) is also divided into at least two sub-conductors (231, 232) running in parallel to each other.

6. The stator unit (3) according to claim 5, ***characterized, in that*** the forward-conductor (21) of the at least one further winding (20) and the return-conductor (22) of the at least one further winding (20) are each completely divided into at least two sub-conductors (211, 212, 221, 221), wherein each of the at least two sub-conductors (211, 212) of the forward-conductor (21) of the at least one further winding (20) is electrically connected to one of at least two sub-conductors (221, 222) of the return-conductor (22) by one of the at least two sub-conductors (231, 232) of the cross-connection (23) of the at least one further winding (20).

7. The stator unit (3) according to claim 6, ***characterized, in that*** each of the at least two sub-conductors (151, 152) of the return-conductor (15) of the at least one winding (13) of the winding layer (12) is connected to exactly one of the at least two sub-conductors (211, 212) of the forward-conductor (21) of the at least one further winding (20) of the at least one further winding layer (19).

8. The stator unit (3) according to claim 7, ***characterized, in that*** further one of the at least two sub-conductors (141, 142) of the forward-conductor (14) of the at least one winding (13) of the winding layer (12) is electrically connected to one of the at least two sub-conductors (221, 222) of the return-conductor (22) of the at least one further winding (20) of the at least one further winding layer (19).

9. The stator unit (3) according to claim 3 and claim 6, ***characterized, in that*** one (151) of the at least two sub-conductors (151, 152) of the return-conductor (15) of the at least one winding (13) of the winding layer (12) is electrically connected to one of the at least two sub-conductors (141, 142) of forward-conductor (14) of the at least one winding (13) of the winding layer (12) via an additional cross-connection (27), ***in that*** one of the at least two sub-conductors (221, 222) of the return-conductor (22) of the at least one further winding (20) of the at least one further winding layer (19) is electrically connected to one (212) of the at least two sub-conductors (211, 212) of forward-conductor (14) of at least one further winding (20) of the at least one further winding layer (19) via another additional cross-connection (27), ***and in that*** another (152) of the at least two sub-conductors (151, 152) of the return-conductor (15) of the at least one winding (13) of the winding layer (12) is electrically connected to another (211) of the at least two sub-conductors (211, 212 of the forward-conductor (21) of the at least one further winding (20) of the at least one further winding layer (19).

10. The stator unit (3) according to any one of claims 1 to 9, ***characterized, in that*** the at least two sub-conductors (141, 142, 151, 152, 161, 162, 211, 212, 221, 222, 231, 232), into which the respective forward-conductor (14, 21), the respective return-conductor (15, 22) and/or the respective cross-connection (16, 23) are divided, are separately arranged on the insulating medium (17) being electrically insulated from each other.

11. The stator unit (3) according to any one of claims 1 to 9, ***characterized, in that*** the at least two sub-conductors (141, 142, 151, 152, 161, 162, 211, 212, 221, 222, 231, 232), into which the respective forward-conductor (14, 21), the respective return-conductor (15, 22) and/or the respective cross-connection (16, 23) are divided, are arranged incompletely separated from one another on the insulating medium (17).

12. The stator unit (2) according to any one of claims 1 to 11, ***characterized, in that*** the respective forward-conductor (14, 21) and the respective return-conductor (15, 22) are arranged in a main layer (121, 191) and the respective cross-connection (16, 23) is arranged in a secondary layer (122, 192), wherein the main layer (121, 191) and the secondary layer (122, 192) form the respective winding layer (12, 19), wherein the main layer (121, 191) and the secondary layer (122, 192) are electrically insulated from each other by the insulating medium (17), and wherein interlayer connections (18) are provided to connect the respective forward-conductor (14, 21) and the respective return-conductor (15, 22) with the respective cross-connection (16, 23).

13. The stator unit (3) according to one of the claims 1 to 12, ***characterized, in that*** the elongated flat coils (8) are configured as elongated printed circuit board coils.

14. An electromagnetic drive system (1) at least comprising at least one stator unit (3) according to one of the claims 1 to 13 to form a stator (2), and at least one shuttle (4) comprising a magnet unit (5) with drive magnets (6), wherein the drive coils (7) arranged on the at least one stator unit (3) are energized in the area of the at least one shuttle (4) by a drive current (I_{D}) to generate an electromagnetic field, which interacts with the drive magnets (6) of the magnet unit (5) of the least one shuttle (4) to move the at least one shuttle (4).

15. The electromagnetic drive system (1) according to claim 14, ***characterized, in that*** the electromagnetic drive system (1) is configured as a long stator linear motor system, wherein the elongated flat coils (8) used as drive coils (7) are arranged on the at least one stator unit (3) forming the stator (2) along a predefined movement path of the at least one shuttle (4), ***or in that*** the electromagnetic drive system (1) is configured as a planar motor system, wherein the elongated flat coils (8) used as drive coils (7) are arranged in at least two coil groups (10, 11) on the at least one stator unit (3) forming the stator (2) and wherein each of the at least two coil groups (10, 11) defines a main direction of movement of the at least one shuttle (4).
